# EUROPEAN PATENT SPECIFICATION

(11) **EP 2 860 271 B1**
(45) Date of publication and mention of the grant of the patent: **18.04.2018**
(21) Application number: 13803603.3
(22) Date of filing: 10.06.2013
(51) Int. Cl.: C22B 23/00, C02F 1/58, C22B 3/44, C02F 101/10, C02F 101/20, C02F 1/52, C02F 103/16

(54) **METHOD COMPRISING NEUTRALIZATION**
VERFAHREN UMFASSEND EINE NEUTRALISATION
PROCÉDÉ CONTENANT UNE NEUTRALISATION

(30) Priority: 12.06.2012 JP 2012133125
(43) Date of publication of application: 15.04.2015
(73) Proprietor: Sumitomo Metal Mining Co., Ltd., Tokyo 105-8716 (JP)
(72) Inventor: HIGUCHI, Hirotaka, Tokyo 1058716 (JP); NISHIKAWA, Isao, Tokyo 1058716 (JP)
(74) Representative: Müller-Boré & Partner Patentanwälte PartG mbB
(86) International application number: PCT/JP2013/065958
(87) International publication number: WO 2013/187367

(56) References cited:
- WO-A1-01/62989
- WO-A1-02/16272
- JP-A- H09 150 065
- JP-A- 2005 350 766
- JP-A- 2010 095 788
- JP-A- 2010 180 439
- KSE C H ET AL: "Hydrometallurgical processing of nontronite type lateritic nickel ores by MHP process", MINERALS ENGINEERING, PERGAMON PRESS , OXFORD, GB, vol. 24, no. 5, 30 November 2010 (2010-11-30), pages 396-415, XP028176469, ISSN: 0892-6875, DOI: 10.1016/J.MINENG.2010.11.010 [retrieved on 2010-12-07]

## Description

The present invention relates to a method, more specifically, to a method including neutralizing and removing a metal impurity ion remained in a barren solution produced through a sulfurization treatment for producing a sulfide containing nickel and cobalt by blowing a hydrogen sulfide gas into a sulfuric acid aqueous solution containing nickel, cobalt, and impurity metal elements.

This application claims priority to Japanese Patent Application No. 2012-133125 filed on June 12, 2012.

Recently, the High Pressure Acid Leach (HPAL) using sulfuric acid has been gathering attention as a hydrometallurgical process for nickel oxide ore. This process does not include dry processes, such as a reduction process and a drying process or the like, unlike the pyrometallurgy process that is a conventional common metallurgical process for nickel oxide ore, but includes a consistent wet process. Thus, it is advantageous in terms of energy and cost. Additionally, the process has the advantage of capable of producing a sulfide containing nickel whose nickel grade is upgraded up to about 50 wt % or so (hereinafter, referred to as a "nickel sulfide"). The nickel sulfide is precipitated and produced by blowing into a hydrogen sulfide gas, and generating a sulfurization reaction in a sulfurization step after purifying leachate produced by leaching the nickel oxide ore (see, for example, PTL1).

Incidentally, in the sulfurization step of the hydrometallurgical process for nickel oxide ore, applying the sulfurization treatment in which the hydrogen sulfide gas is blown into the sulfuric acid aqueous solution containing chiefly the nickel, as mentioned above, produces a sulfide containing the nickel or the like and a barren solution whose nickel concentration is stabilized at a low level.

The barren solution produced in the sulfurization step is a solution containing iron, magnesium, and manganese remained without being subjected to sulfurization, and has low (pH. Accordingly, when discharging the barren solution, it becomes necessary to apply the neutralization treatment to remove a residual metal ion.

Conventionally, it has been used heretofore a method in which neutralization is applied by using mainly one type of neutralizer, as a method for neutralizing the barren solution. It is mandatory, in this method, to use a high alkaline neutralizer, to achieve pH necessary for neutralization. Specifically, it may use caustic soda and sodium carbonate or the like as an example of probable high alkaline neutralizer, but they are disadvantageous in terms of cost. Therefore, it is often used industrially slaked lime slurry, for example.

However, such a high alkaline neutralizer is typically packed up by a flexible container or the like, and involves a cumbersome pretreatment and a pretreatment facility therefor when the usage amount of neutralizer increases. Further, although neutralizer such as slaked lime slurry is advantageous in terms of cost as compared with another neutralizer, there still remains a problem unsolved that it has a great impact on a finish cost, when the usage amount of neutralizer swells up stupendously due to the increased amount of generation of a barren solution from the sulfurization step.

PTL1: Japanese Patent Application Laid-Open No. 2005-350766 C.H. Köse and Y.A. Topkaya (in Minerals Engineering, 24 (5), 2011, pp. 396-415) describe the hydrometallurgical processing of nontronite type lateritic nickel ores by a MHP process. WO 01/62989 A1 describes a method for the recovery of nickel and/or cobalt.

WO 02/16272 A1 describes a water treatment method.

The present invention is proposed in view of such actual circumstances the prior art intrinsically entails, and an object of the present invention is to provide a method capable of reducing the usage amount of expensive high alkaline neutralizer, and applying an effective neutralization treatment, when applying a neutralization treatment to a barren solution to be generated through treatment steps for producing nickel and cobalt from a sulfuric acid solution containing the nickel, the cobalt, and impurity metal elements.

As a result of intensive study made by the inventors of the present invention in order to attain the above-mentioned object, it was found that the reduction of the usage amount of expensive neutralizer can be achieved, for example, by replacing a portion of neutralizer to be used, such as slaked lime slurry with inexpensive calcium carbonate slurry, and applying a gradual neutralization treatment whose pH at an end point is adjusted by using two types of neutralizers, in the neutralization and removal steps of the impurity metal elements in a barren solution. Thus, the inventors finally completed their invention.

Namely, a method comprising neutralizing and removing a metal ion remained in a barren solution produced through a sulfurization treatment for producing a sulfide containing nickel and cobalt by blowing a hydrogen sulfide gas into a sulfuric acid aqueous solution containing the nickel and the cobalt, and impurity metals containing at least one or more of iron, magnesium, and manganese, the method comprises:
S1) a leaching step (S1) of adding sulfuric acid to a nickel oxide ore slurry, the ore comprising chiefly laterite ore, under a temperature of 220 to 280°C under high pressure to produce leached slurry composed of leachate and a leached residue;
S3) a neutralization step (S3) of producing a mother liquid for nickel recovery composed of a sulfuric acid aqueous solution containing nickel, cobalt and impurity metals containing at least one or more of iron, magnesium, and manganese and removing trivalent ferrous ion as sediment slurry by adding calcium carbonate to the leachate produced in step S1 so that pH of the leachate is 4.0 or less while suppressing oxidation of the leachate;
S4) a sulfurization step (S4) of producing a barren solution and a sulfide containing nickel and cobalt by blowing a hydrogen sulfide gas into the mother liquid produced in step S3;
S11) a first neutralization treatment step (S11) of applying a neutralization treatment to the barren solution produced in step S4, with a range of pH 5.0 to 6.0 as an end point, by using calcium carbonate slurry as a first neutralizer; and
S12) a second neutralization treatment step (S12) of applying a neutralization treatment to a solution produced in the first neutralization treatment step (S11) by using slaked lime slurry as a second neutralizer to produce a sediment containing a metal remained in the barren solution and a post-neutralized solution from which the metal ion is removed.

It is preferable that in the neutralization step (S3), the calcium carbonate is added so that pH of the leachate is 3.2 to 3.8, and the barren solution produced in the sulfurization step (S4) has pH of 1.0 to 3.0.

It is preferable for pH at the end point in the first neutralization treatment step to be within a range of 5.4 to 5.8.

In the second neutralization treatment step, it is preferable for a neutralization treatment to be conducted with a range of pH 8.5 to 9.5 as the end point.

In a hydrometallurgical process based on high pressure acid leach for recovering the nickel from a nickel oxide ore, the sulfuric acid aqueous solution is a mother liquid composed of the sulfuric acid aqueous solution containing the nickel and the cobalt to be recovered through a leaching step, a solid-liquid separation step, and a neutralization step, and the impurity metals containing any of iron, magnesium, and manganese at least one or more.

The invention enables the reduction of the usage amount of expensive high alkaline neutralizer, and application of a neutralization treatment for efficiently neutralizing and removing impurity metal elements in the barren solution.

Fig. 1 is a flow chart of a hydrometallurgical process using the high pressure acid leach for nickel oxide ore.
Fig. 2 is a flow chart of a neutralization method according to the present invention.
Fig. 3 is a view showing the results of the additive amount of neutralizer used in Example 1 and Comparative Examples 1 and 2.

Hereinafter, a detailed description will be made to a neutralization method according to the present invention in the following order with reference to the accompanying drawings.
1. Summary of invention
2. Hydrometallurgical process for nickel oxide ore
3. Neutralization method
   3-1. First neutralization treatment step
   3-2. Second neutralization treatment step
4. Examples

### <1. Summary of invention>

A method according to the present invention comprises neutralizing and removing a residual impurity metal ion in a barren solution to be produced through a sulfurization treatment for producing a sulfide containing nickel and cobalt by blowing a hydrogen sulfide gas into a sulfuric acid aqueous solution containing the nickel and the cobalt, as well as impurity metals containing any of iron, magnesium, and manganese at least one or more.

Specifically, the method includes a first neutralization treatment step of applying a neutralization treatment to the above-mentioned barren solution, with a range of pH 5.0 to 6.0 as the end point, using calcium carbonate slurry as a first neutralizer, and a second neutralization treatment step of applying a neutralization treatment to a solution produced in the first neutralization treatment step using slaked lime slurry as a second neutralizer, to produce a sediment containing metals remained in the barren solution and a post-neutralization solution from which a metal ion is removed.

Thus, in the method according to the present invention, it is important to gradually apply a neutralization treatment with a predetermined pH range as the end point, using two types of neutralizers. One type of neutralizer is calcium carbonate slurry and that is an inexpensive neutralizer. A neutralization treatment at a first stage is applied by using the calcium carbonate slurry.

According to such a method, since the neutralization treatment is first applied with a predetermined pH range at the end point using the inexpensive calcium carbonate slurry as a first neutralization treatment step, it allows the effective reduction of the usage amount of high alkaline neutralizer, such as conventionally used slaked lime slurry. Thus it allows efficient neutralization and removal of an impurity metal ion. This prevents an excess increase in a treatment cost, thereby enabling an efficient treatment, even when the amount of barren solution to be treated is increased.

### <2. Hydrometallurgical process for nickel oxide ore >

In the hydrometallurgical process based on a high pressure acid leach, nickel is recovered from nickel oxide ore, and a mother liquid is produced, which is composed of a sulfuric acid aqueous solution containing the nickel and the cobalt which is recovered through a leaching step, a solid-liquid separation step, and a neutralization step. The mother liquid also contains impurity metals containing at least one or more of any of iron, magnesium, and manganese.

A barren solution is discharged from the sulfurization step, in which a sulfide containing the nickel and the cobalt is produced by blowing a hydrogen sulfide gas into the mother liquid.

Herein, a description will be made to the outline of the hydrometallurgical process for nickel oxide ore. Hereupon, a description will proceed by taking the hydrometallurgical process using the high pressure acid leach as a specific example.

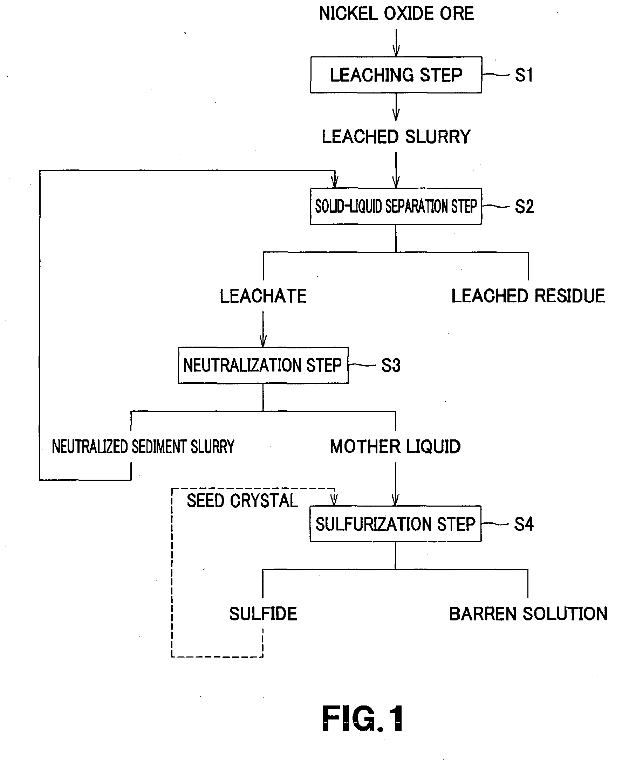

Fig. 1 shows an example of a flow chart of the hydrometallurgical process by the high pressure acid leach for nickel oxide ore. As shown in Fig.1, the hydrometallurgical process for nickel oxide ore includes a leaching step S1 of leaching nickel or the like from the nickel oxide ore; a solid-liquid separation step S2 of separating the produced leached slurry into leachate and a leached residue; a neutralization step S3 of neutralizing the leachate to separate the neutralized leachate into a mother liquid for nickel recovery and neutralized sediment slurry; and a sulfurization step S4 of sulfurizing a sulfuric acid aqueous solution that is a mother liquid by blowing a hydrogen sulfide gas thereinto to produce a sulfide containing nickel and cobalt and a barren solution.

### (1) Leaching step

In the leaching step S1, slurry of the nickel oxide ore is stirred, under temperature of 220 to 280 degrees C, by adding a sulfuric acid thereto, to produce leached slurry composed of leachate and a leached residue. In the leaching step S1, a high temperature pressurized vessel (autoclave) is used, for example.

The nickel oxide ore used in the leaching step S1 includes chiefly so-called laterite ore, such as limonite ore and saprolite ore. The nickel content of the laterite ore is typically 0.8 to 2.5 wt % and is contained as hydroxide or silicic magnesia ore (magnesium silicate). The iron content is 10 to 50 wt % and is contained chiefly in the form of trivalent hydroxide (goethite) where a portion of bivalent iron is contained in the silicic magnesia ore.

Specifically, in the leaching step S1, a leaching reaction and a high temperature thermal hydrolysis reaction represented by the following formulae (1) to (5) occur, where leaching of nickel and cobalt or the like as sulfate and immobilization of leached iron sulfate as hematite are taken place. However, as immobilization of a ferrous ion progresses incompletely, a liquid portion of the produced leached slurry generally contains a bivalent and a trivalent ferrous ion, in addition to nickel and cobalt or the like.

- Leaching reaction

   MO+H₂SO₄ ⇒ MSO₄ + H₂O ... formula (1)

   (where M denotes Ni, Co, Fe, Zn, Cu, Mg, Cr, Mn or the like), 2Fe (OH)₃ + 3H₂SO₄ ⇒ Fe₂ (SO₄)₃+6H₂O ... formula (2) FeO + H₂SO₄ ⇒ FeSO₄ + H₂O ... formula (3)
- High temperature thermal hydrolysis reaction

   2FeSO₄ + H₂SO₄ + 1/2O₂ ⇒ Fe₂(SO₄)₃ + H₂O ... formula (4)

   Fe₂(SO₄)₃ + 3H₂O ⇒ Fe₂O₃ + 3H₂SO₄ ... formula (5)

No special limitation is imposed on the slurry concentration in the leaching step S1, but it is preferable to adjust for the slurry concentration of leached slurry to be 15 to 45 wt %. Further, no special limitation is imposed on the additive amount of sulfuric acid used in the leaching step S1, but the excessive amount is used to the degree that iron contained in the ore is leached. For example, the excessive amount shall here be 300 to 400 kg per ore of 1 ton. When the additive amount of sulfuric acid per ore of 1 ton is to exceed 400 kg, it is unpreferable because a sulfuric acid cost increases.

### (2) Solid-liquid separation step

In the solid-liquid separation step S2, leached slurry produced in the leaching step S1 is multistage cleaned to produce leachate containing nickel and cobalt, and a leached residue.

No special limitation is imposed on the multistage cleaning method in the solid-liquid separation step S2, but it is preferable to use the Counter Current Decantation (CCD) in which a cleaning solution not containing nickel is brought into contact with a countercurrent. This enables the reduction of cleaning solution to be newly introduced into the system, thereby attaining a recovery rate of 95 % or more for nickel and cobalt.

### (3) Neutralization step

In the neutralization step S3, a mother liquid for nickel recovery and neutralized sediment slurry containing trivalent ferrous ion are produced by adding calcium carbonate so that pH of the leachate is 4.0 or less, preferably is 3.2 to 3.8, while suppressing oxidation of the leachate separated in the solid-liquid separation step S2. In the neutralization step S3, applying a neutralization treatment to the leachate in this way neutralizes an excess acid used in the leaching step S1 by the high temperature acid leach, and removes a trivalent ferrous ion remained in the solution. Note that when pH of the leachate exceeds 4.0, more hydroxide of nickel is generated.

The neutralized sediment slurry produced in the neutralization step S3 can be transferred to the solid-liquid separation step S2, as needed. Thereby, it becomes possible to effectively recover nickel contained in the neutralized sediment slurry. Specifically, iteratively transferring the neutralized sediment slurry to the solid-liquid separation step S2, operated under a low pH condition, enables acceleration of dissolution of nickel hydroxide, produced by a local reaction with moisture adhered on the neutralized sediment and a surface of the neutralized sediment, concurrently with cleaning of the leached residue, which reduces nickel that is a recovery loss.

### (4) Sulfurization step

In the sulfurization step S4, a sulfurization reaction is generated by blowing a hydrogen sulfide gas into a sulfuric acid aqueous solution that is a mother liquid for nickel recovery produced in the neutralization step S3 to thereby produce a sulfide containing nickel and cobalt and a barren solution.

Where zinc is contained in the mother liquid, it may be allowed to perform a process, in which zinc is selectively separated as a sulfide, prior to producing a sulfide composed of nickel and cobalt by a sulfurization reaction. As a process for selectively separating the zinc, a weak condition is created at the time of a sulfurization reaction to suppress a rate of the sulfurization reaction, which inhibits coprecipitation of nickel whose concentration is high as compared with that of zinc, for selectively removing the zinc.

As described above, the mother liquid is a sulfuric acid aqueous solution containing nickel and cobalt produced through the neutralization step S3 after leaching the nickel oxide ore. Specifically, for example, a sulfuric acid aqueous solution may be used, which has pH of 3.2 to 4.0, nickel concentration of 2 to 5 g/L, and cobalt concentration of 0.1 to 1.0 g/L. and in addition contains impurity metal elements containing at least one or more of any of iron, magnesium, and manganese as impurity compositions. The impurity metal compositions greatly vary depending on oxidation-reduction potential, operating condition of autoclave, and grade of ore, but impurity metal elements such as iron, magnesium, and manganese are generally contained therein about several g/L or so.

Herein, although alkaline earth metals such as iron, manganese, alkali metal, and magnesium that are impurity metal compositions contained in the sulfuric acid aqueous solution are existing relatively in large quantities with respect to nickel and cobalt to be recovered, stability thereof, as a sulfide, to be produced in the sulfurization step S4 is low. For this reason, these impurity metal compositions are not contained in a sulfide to be produced but they are contained in a barren solution (post-sulfurized treatment solution) produced by removing a produced sulfide. Incidentally, the barren solution has pH of 1.0 to 3.0 or so.

Thus, in the sulfurization step S4, a sulfide which contains nickel and cobalt containing less impurities and a barren solution whose nickel concentration is stabilized at a low level are produced and recovered. As a recovery method, slurry of the sulfide produced by a sulfurization reaction is subject to sedimentation separation treatment by utilizing a precipitator such as a thickener. The sulfide that is a sediment is separated and recovered from the bottom of the thickener, and constituents in an aqueous solution are overflowed therefrom and recovered as a barren solution.

### <3. Neutralization Method >

As mentioned above, the barren solution produced through the sulfurization step S4 of the hydrometallurgical process for nickel oxide ore contains an impurity metal ion containing at least one or more of any of iron, magnesium, and manganese. Accordingly, when discharging the barren solution outside of the system, application of a neutralization treatment to remove a residual metal ion in the barren solution is required. Moreover, even when the barren solution is iteratively used in the above-mentioned hydrometallurgy, it is preferable to apply a neutralization treatment to bring impurity compositions into a state where the compositions are reduced to the utmost.

Conventionally, in the neutralization treatment to a barren solution, a high alkaline neutralizer, such as, for example, slaked lime slurry has been used in order to achieve pH concentration necessary for neutralization. However, the high alkaline neutralizer of this kind requires a cumbersome pretreatment and a pretreatment facility therefor, when the amount of usage increases, due to the increased amount of generation of a barren solution from the sulfurization step. Accordingly, although neutralizer such as slaked lime slurry is relatively advantageous in terms of cost as compared with another neutralizer, there still remains a problem unsolved that it has a great impact on a finish cost when the amount of usage swells out stupendously with an increase in the amount of barren solution to be treated.

Then, in the method according to the present invention, it takes a measure of replacing a portion of the neutralizer to be used being slaked lime slurry with inexpensive calcium carbonate slurry, and a gradual neutralization treatment is applied by using the two types of neutralizers.

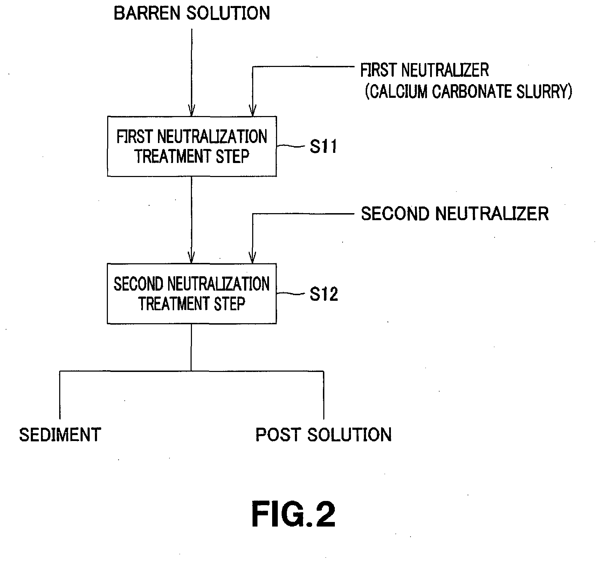

Specifically, as shown in a flow chart of Fig. 2, the method includes a first neutralization treatment step S11 of applying a neutralization treatment to a barren solution, with a predetermined pH range as the end point by using calcium carbonate slurry, as a first neutralizer; and a second neutralization treatment step S12 of applying a neutralization treatment to a solution produced in the first neutralization treatment step S11 by using slaked lime slurry as a second neutralizer, to produce a sediment containing impurity metals and a post-neutralized solution.

### <3-1. First neutralization treatment step>

In the first neutralization treatment step S11, calcium carbonate slurry is used as a neutralizer and a neutralization treatment is applied to a barren solution produced through the above-mentioned sulfurization step S4.

The calcium carbonate slurry used in the first neutralization treatment step S11 is an inexpensive neutralizer. Therefore, applying the first the neutralization treatment at a first stage by using the inexpensive calcium carbonate slurry, as a first neutralizer, allows the reduction of the usage amount of high alkaline neutralizer to be used in a neutralization treatment at a second stage to be mentioned later.

In the first neutralization treatment step in which a gradual neutralization is applied, it is important to adjust pH for applying a neutralization treatment, to a predetermined pH range as the end point of neutralization treatment. Specifically, in the first neutralization treatment step S11, a neutralization treatment is applied, with pH at the end point as a range of 5.0 to 6.0, preferably as a range of 5.4 to 5.8.

Thus, in the first neutralization treatment step S11, calcium carbonate slurry is used as a neutralizer, and the neutralization treatment at a first stage is applied whose pH at the end point is adjusted and set to 5.0 to 6.0. This reduces the usage amount of high alkaline neutralizer as described above, and in addition, the total usage amount of neutralizer through the neutralization treatment is reduced. As a result, it realizes efficient neutralization treatment with a reduced treatment cost, thereby preventing an excessive increase in a treatment cost, even when the amount of barren solution to be treated is increased.

Herein, in case pH at the end point in the first neutralization treatment is less than 5.0, the first neutralization treatment becomes insufficient, leading to an increased load of the neutralization treatment in the second neutralization treatment S12 to be mentioned later, so that the usage amount of the second neutralizer increases. Meanwhile, in case pH at the end point exceeds 6.0, a load of the first neutralization treatment increases, resulting in an increase in the usage amount of the calcium carbonate slurry. Furthermore, even when the load of the first neutralization treatment is increased by adjusting pH at the end point so as to exceed 6.0, the usage amount of the neutralizer in the second neutralization treatment step S12 scarcely changes. Thus, the usage amount of the neutralizer in the entire neutralization treatment increases, ending in economically inefficient.

Moreover, applying the neutralization treatment at a first stage, preferably with a range of pH 5.4 to 5.8 as the end point, enables the more effective reduction of the usage of neutralizer in the first and the second neutralization treatments, thereby allowing an efficient treatment, without excessively increasing a treatment cost, even in the case of the increased amount of barren solution to be treated.

As no special limitation is imposed on measurement of pH and measurement can be made with a well-known technique, it is able to determine where the end point is based on the measured pH. For example, a pH meter is provided within a neutralization reaction tank to enable pH of solution within the neutralization reaction tank to be measured at all times, for observing pH that changes with the progress of a neutralization reaction incident to the addition of neutralizer, and for determining where the end point of neutralization treatment is.

### <3-2. Second neutralization treatment step>

In the second neutralization treatment step S12, a neutralization treatment is applied to a solution produced through the first neutralization treatment step S11 by using slaked lime slurry as a second neutralizer. With the second neutralization treatment, a sediment containing impurity metals and a post-neutralization solution from which the impurity metals are removed are produced.

No special limitation is imposed on the second neutralizer as far as it is a high alkaline neutralizer, specifically slaked lime slurry. Among other things, the relatively inexpensive slaked lime slurry is used from the perspective of economic efficiency.

As mentioned above, a neutralization treatment has been conventionally applied only by using the high alkaline neutralizer, such as slaked lime slurry. However, an increased barren solution to be treated causes an increase in the amount of necessary neutralizer. The increased amount of neutralizer induces an excessively elevated treatment cost, even when relatively inexpensive slaked lime slurry is used, precluding the conventional technique from applying a treatment with high economic effectivity. Contrarily, since in the neutralization method according to the present invention, a neutralization treatment is first applied, as mentioned above, with a predetermined pH range as the end point, by using calcium carbonate slurry, in the first neutralization treatment step S 11, the invention enables the effective reduction of the amount of high alkaline neutralizer slaked lime slurry, used in the second neutralization treatment. This prevents an excessive increase in a treatment cost, even when the amount of barren solution to be treated increases, which allows an efficient treatment.

In the neutralization treatment of the second neutralization step S12, it is preferable to apply a treatment by adjusting pH to a range of pH 8.5 to 9.5 as a pH range at the end point.

In case pH at the end point in the second neutralization treatment is less than 8.5, a sediment of impurity metal elements, such as iron, magnesium, and manganese contained in a barren solution are deficiently produced; therefore it is likely that an impurity metal ion is remained in a post-neutralization solution. Meanwhile, in case pH at the end point exceeds 9.5, precipitate formation of the impurity metals no longer progresses any further to cause an increased load of the neutralization treatment. The usage amount of the second neutralizer slaked lime slurry increases, resulting in deteriorated economic efficiency.

Preferably, the neutralization treatment at a second stage is applied, with a range of pH 8.9 to 9.1 as the end point. This allows the effective production of the sediment of the impurity metal elements in the barren solution, while suppressing the usage amount of the second neutralizer to the minimum, thereby applying more efficient neutralization and removal treatments.

Even for pH control in the second neutralization treatment step S12, it can determine where the end point of the neutralization treatment is by using a well-known technique, as with pH measurement in the first neutralization treatment step S 11 and pH control based thereon.

The sediment containing the impurity metal elements produced through the second neutralization treatment step S12, and a post-neutralized solution from which the impurity metals are removed can be separated and recovered by applying a well-known solid-liquid separation treatment.

### [Examples]

### 4. Examples

Hereinafter, while a description will be made to Examples according to the present invention, the invention is not necessarily limited to the following Examples.

### [Example 1]

In the hydrometallurgical process for nickel oxide ore, a sulfurization step was applied, in which a sulfide containing nickel and cobalt was produced by blowing a hydrogen sulfide gas into a mother liquid composed of a sulfuric acid aqueous solution containing the nickel and the cobalt and impurity metals containing iron, magnesium, and manganese or the like recovered through the leaching step, the solid-liquid separation step, and the neutralization step. Subsequently, a neutralization treatment for neutralizing and removing an impurity metal ion contained in a barren solution was applied to the barren solution discharged from the sulfurization step.

Specifically, in the neutralization treatment of Example 1, a first neutralization treatment was applied, in which calcium carbonate slurry having density of 1.3 g/cm³ was first added to a barren solution of 1 m³ (pH 1.7), as a first neutralizer, and then the barren solution was neutralized until pH at the end point reaches 5.5 (pH (1) at the end point).

Subsequently, a second neutralization treatment was applied to a solution after being subjected to the first neutralization treatment, in which slaked lime slurry having density of 1.2 g/cm³ was added as a second neutralizer and then the solution was neutralized, until pH at the end point reached 9.0 (pH (2) at the end point). At this moment, the additive amount of respective neutralizers used in the first and second neutralization treatments was found.

### [Comparative Example 1]

In Comparative Example 1, a neutralization treatment was applied as with Example 1 to find the additive amount of the respective neutralizers, except that pH at the end point in the first neutralization treatment was set to 6.5 (pH (1) at the end point).

### [Comparative Example 2]

In Comparative Example 2, a neutralization treatment was applied to a barren solution of 1 m³, by using only slaked lime slurry as a neutralizer until pH at the end point reaches pH 9.0 at the end point (despite only 1 stage, conveniently it shall be "pH (2) at the end point"). Then, the additive amount of the neutralizer required on this occasion was found.

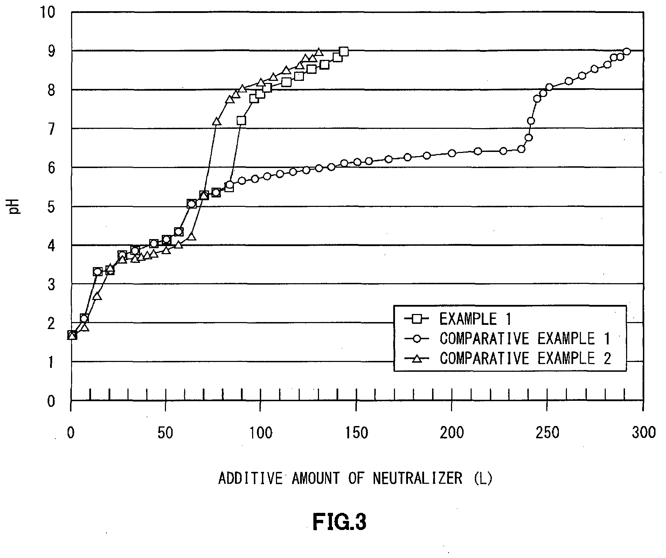

Fig.3 and Table 1 show the results of the additive amount of the neutralizer obtained in Example 1, and Comparative Examples 1 and 2.

**[Table 1]**

| | Example 1 | Comparative Example 1 | Comparative Example 2 |
|---|---|---|---|
| Initial pH | 1.7 | 1.7 | 1.7 |
| pH (1) at the end point | 5.5 | 6.5 | - |
| Additive amount of calcium carbonate slurry (L) | 83 | 235 | - |
| pH (2) at the end point | 9.0 | 9.0 | 9.0 |
| Additive amount of slaked lime slurry (L) | 60 | 55 | 130 |

As can be seen from the results shown in Fig.3 and Table 1, in Example 1 in which the neutralization treatment at a first stage was applied, with pH at the end point ranging from 5.0 to 6.0 as pH 5.5, by using calcium carbonate slurry as a first neutralizer and then the neutralization treatment at a second stage was applied by using high alkaline slaked lime slurry as a second neutralizer, the additive amount of the slaked lime slurry is 60 L. Thus, an efficient treatment was performed. The total usage amount of the neutralizer of the entire neutralization treatment was 143 L. Out of the total usage amount, 80 L accounted for inexpensive calcium carbonate slurry used in the neutralization treatment at a first stage. As mentioned above, reducing the usage amount of the slaked lime slurry was realized, and also substantially reducing a treatment cost in the entire neutralization treatment.

Meanwhile, while the neutralization treatment at two stages was applied by using two types of neutralizers, as with Example 1, in Comparative Example 1 in which pH at the end point of the first neutralization treatment was set to 6.5, a load of the neutralization treatment at a first stage increased and the additive amount of the calcium carbonate slurry surged up to 235 L. It followed that the additive amount ran up to the amount of 2.5 times or more as compared with that of Example 1. Additionally, although in Comparative Example 1, a load of the neutralization treatment at a first stage was made larger, the additive amount of the slaked lime slurry used in the neutralization treatment at a second stage ran into 55 L, in which case the additive amount was almost unchanged as compared with that of Example 1. Consequently, the total usage amount of the neutralizer in the entire neutralization treatment was remarkably increased, and therefore it failed to apply an efficient neutralization treatment accordingly.

In Comparative Example 2 in which the neutralization treatment was applied, as in the conventional way, by using only the slaked lime slurry, the additive amount of the slaked lime slurry surged up to 130 L. The usage amount of the slaked lime slurry was equivalent to the amount twice or more as compared with that of the slaked lime slurry in Example 1. The usage amount of the neutralizer in Comparative Example 2 was almost the same as the total usage amount of the neutralizer in Example 1, but a treatment cost was by far increased in Comparative Example 2, as compared with Example 1, in which the gradual neutralization treatment was applied by using inexpensive calcium carbonate slurry, as a first neutralizer. From this, it was presumed that in such a treatment, a treatment cost is noticeably increased, with an increase in the amount of barren solution to be treated.

## Claims

1. A method comprising neutralizing and removing a metal ion remained in a barren solution produced through a sulfurization treatment for producing a sulfide containing nickel and cobalt by blowing a hydrogen sulfide gas into a sulfuric acid aqueous solution containing the nickel and the cobalt, and impurity metals containing at least one or more of iron, magnesium, and manganese, the method comprises:
S1) a leaching step (S1) of adding sulfuric acid to a nickel oxide ore slurry, the ore comprising chiefly laterite ore, under a temperature of 220 to 280°C under high pressure to produce leached slurry composed of leachate and a leached residue;
S3) a neutralization step (S3) of producing a mother liquid for nickel recovery composed of a sulfuric acid aqueous solution containing nickel, cobalt and impurity metals containing at least one or more of iron, magnesium, and manganese and removing trivalent ferrous ion as sediment slurry by adding calcium carbonate to the leachate produced in step S1 so that pH of the leachate is 4.0 or less while suppressing oxidation of the leachate;
S4) a sulfurization step (S4) of producing a barren solution and a sulfide containing nickel and cobalt by blowing a hydrogen sulfide gas into the mother liquid produced in step S3;
S11) a first neutralization treatment step (S11) of applying a neutralization treatment to the barren solution produced in step S4, with a range of pH 5.0 to 6.0 as an end point, by using calcium carbonate slurry as a first neutralizer; and
S12) a second neutralization treatment step (S12) of applying a neutralization treatment to a solution produced in the first neutralization treatment step (S11) by using slaked lime slurry as a second neutralizer to produce a sediment containing a metal remained in the barren solution and a post-neutralized solution from which the metal ion is removed.

2. The method according to claim 1, wherein in the neutralization step (S3), the calcium carbonate is added so that pH of the leachate is 3.2 to 3.8, and the barren solution produced in the sulfurization step (S4) has pH of 1.0 to 3.0.

3. The method according to claim 1, wherein pH at the end point in the first neutralization treatment step (S11) is within a range of 5.4 to 5.8.

4. The method according to claim 1, wherein in the second neutralization treatment step (S12), a neutralization treatment is applied, with a range of pH 8.5 to 9.5 as the end point.

## Patentansprüche

1. Verfahren, umfassend das Neutralisieren und das Entfernen eines Metallions, welches in einer unhaltigen Lösung zurückgeblieben ist, hergestellt durch eine Sulfidierungsbehandlung zur Herstellung eines Sulfids, enthaltend Nickel und Kobalt, durch das Einleiten eines Schwefelwasserstoffgases in eine wässrige Schwefelsäurelösung, enthaltend das Nickel und das Kobalt und Verunreinigungsmetalle, enthaltend mindestens eines oder mehr aus Eisen, Magnesium und Mangan, wobei das Verfahren umfasst:
S1) einen Auslaugungsschritt (S1) des Hinzufügens von Schwefelsäure zu einer Aufschlämmung von Nickeloxiderz, wobei das Erz hauptsächlich Lateriterz umfasst, bei einer Temperatur von 220 bis 280°C unter hohem Druck, um ausgelaugte Aufschlämmung, zusammengesetzt aus Auszug und einem Laugungsrückstand, herzustellen;
S3) einen Neutralisierungsschritt (S3) des Herstellens einer Mutterlauge zur Nickelrückgewinnung, zusammengesetzt aus einer wässrigen Schwefelsäurelösung, enthaltend Nickel, Kobalt und Verunreinigungsmetalle, enthaltend mindestens eines oder mehr aus Eisen, Magnesium und Mangan, und des Entfernens eines trivalenten Eisenions als Sedimentaufschlämmung durch das Hinzufügen von Calciumcarbonat zu dem Auszug, hergestellt in Schritt S1, so dass der pH des Auszugs 4,0 oder weniger beträgt, während die Oxidation des Auszugs unterdrückt wird;
S4) ein Sulfidierungsschritt (S4) des Herstellens einer unhaltigen Lösung und eines Sulfids, enthaltend Nickel und Kobalt, durch das Einleiten eines Schwefelwasserstoffgases in die Mutterlauge, hergestellt in Schritt S3;
S11) einen ersten Neutralisierungsbehandlungsschritt (S11) des Anwendens einer Neutralisierungsbehandlung auf die unhaltige Lösung, hergestellt in Schritt S4, mit einem Bereich von pH 5,0 bis 6,0 als einem Endpunkt, durch das Verwenden einer Calciumcarbonataufschlämmung als ein erstes Neutralisierungsmittel; und
S12) einen zweiten Neutralisierungsbehandlungsschritt (S12) des Anwendens einer Neutralisierungsbehandlung auf eine Lösung, hergestellt in dem ersten Neutralisierungsbehandlungschritt (S11), durch das Verwenden von Löschkalkaufschlämmung als ein zweites Neutralisierungsmittel, um ein Sediment, enthaltend ein Metall, welches in der unhaltigen Lösung zurückgeblieben ist, und eine post-neutralisierte Lösung, aus welcher das Metallion entfernt ist, herzustellen.

2. Verfahren nach Anspruch 1, wobei in dem Neutralisierungsschritt (S3) das Calciumcarbonat derart hinzugefügt wird, dass der pH des Auszugs 3,2 bis 3,8 beträgt und die unhaltige Lösung, hergestellt in dem Sulfidierungsschritt (S4), einen pH von 1,0 bis 3,0 aufweist.

3. Verfahren nach Anspruch 1, wobei der pH an dem Endpunkt in dem ersten Neutralisierungsbehandlungsschritt (S11) in einem Bereich von 5,4 bis 5,8 liegt.

4. Verfahren nach Anspruch 1, wobei in dem zweiten Neutralisierungsbehandlungsschritt (S12) eine Neutralisierungsbehandlung angewandt wird mit einem Bereich von pH 8,5 bis 9,5 als dem Endpunkt.

## Revendications

1. Procédé comprenant la neutralisation et l'élimination d'un ion métallique restant dans une solution stérile produite par l'intermédiaire d'un traitement de sulfuration pour produire un sulfure contenant du nickel et du cobalt par l'introduction d'un sulfure d'hydrogène gazeux dans une solution aqueuse d'acide sulfurique contenant le nickel et le cobalt, et des impuretés métalliques contenant au moins un ou plusieurs parmi le fer, le magnésium, et le manganèse, le procédé comprend :
S1) une étape de lixiviation (S1) consistant à ajouter de l'acide sulfurique à une suspension de minerai d'oxyde de nickel, le minerai comprenant principalement un minerai de latérite, à une température de 220 à 280 °C sous pression élevée afin de produire une suspension lixiviée composée d'un lixiviat et d'un résidu lixivié ;
S3) une étape de neutralisation (S3) consistant à produire une liqueur mère à des fins de récupération de nickel composée d'une solution aqueuse d'acide sulfurique contenant du nickel, du cobalt et des impuretés métalliques contenant au moins un ou plusieurs parmi le fer, le magnésium, et le manganèse et à éliminer l'ion ferreux trivalent en tant que suspension sédimentaire par l'ajout de carbonate de calcium au lixiviat produit dans l'étape S1 de façon que le pH du lixiviat soit de 4,0 ou moins tout en supprimant l'oxydation du lixiviat ;
S4) une étape de sulfuration (S4) consistant à produire une solution stérile et un sulfure contenant du nickel et du cobalt par l'introduction d'un sulfure d'hydrogène gazeux dans la liqueur mère produite dans l'étape S3 ;
S11) une première étape de traitement par neutralisation (S11) consistant à appliquer un traitement par neutralisation à la solution stérile produite dans l'étape S4, avec une plage de pH allant de 5,0 à 6,0 en tant que point final, par l'utilisation d'une suspension de carbonate de calcium en tant que premier agent de neutralisation ; et
S12) une seconde étape de traitement par neutralisation (S12) consistant à appliquer un traitement par neutralisation à une solution produite dans la première étape de traitement par neutralisation (S11) par l'utilisation d'une suspension de chaux éteinte en tant que second agent de neutralisation pour produire un sédiment contenant un métal restant dans la solution stérile et une solution post-neutralisée à partir de laquelle l'ion métallique est éliminé.

2. Procédé selon la revendication 1, dans lequel dans l'étape de neutralisation (S3), le carbonate de calcium est ajouté de façon que le pH du lixiviat soit de 3,2 à 3,8, et que la solution stérile produite dans l'étape de sulfuration (S4) ait un pH de 1,0 à 3,0.

3. Procédé selon la revendication 1, dans lequel le pH au point final dans la première étape de traitement par neutralisation (S11) est situé dans une plage allant de 5,4 à 5,8.

4. Procédé selon la revendication 1, dans lequel dans la seconde étape de traitement par neutralisation (S12), un traitement par neutralisation est appliqué, avec une plage de pH allant de 8,5 à 9,5 en tant que point final.
